# EUROPÄISCHE PATENTSCHRIFT

(11) **EP 2 323 746 B1**
(45) Veröffentlichungstag und Bekanntmachung des Hinweises auf die Patenterteilung: **11.10.2017**
(21) Anmeldenummer: 09778116.5
(22) Anmeldetag: 26.08.2009
(51) Int. Cl.: B01D 35/30

(54) **FILTERVORRICHTUNG**
FILTER DEVICE
DISPOSITIF DE FILTRATION

(30) Priorität: 19.09.2008 DE 102008048155
(43) Veröffentlichungstag der Anmeldung: 25.05.2011
(73) Patentinhaber: Hydac Filtertechnik GmbH, 66280 Sulzbach/Saar (DE)
(72) Erfinder: KÜHNRICH, Silke, 66333 Völklingen (DE); WILKENDORF, Werner, 66564 Ottweiler (DE)
(74) Vertreter: Bartels, Martin Erich Arthur
(86) Internationale Anmeldenummer: PCT/EP2009/006175
(87) Internationale Veröffentlichungsnummer: WO 2010/031488

(56) Entgegenhaltungen:
- DE-A1- 2 506 359
- DE-U1- 8 804 930
- DE-U1-202006 011 990
- FR-A1- 2 380 058

## Beschreibung

Die Erfindung betrifft eine Filtervorrichtung mit den Merkmalen im Oberbegriff von Anspruch 1.

Filtervorrichtungen zur Aufnahme von Filterelementen sind in einer Vielzahl von Ausführungsformen auf dem Markt frei erhältlich. Ein nicht unbedeutender Anteil der Herstellungskosten entfällt bei derartigen Filtervorrichtungen auf die Ausbildung der Halteeinrichtung zur lösbaren Fixierung des Filterelementes innerhalb des zugehörigen Gehäuses sowie auf die Dichteinrichtung zum Abdichten des Inneren des Filterelementes gegenüber dem Filtergehäuse.

Bei einer in dem Dokument WO 2005/123216 A1 aufgezeigten Filtervorrichtung der eingangs genannten Art ist in dem Bestreben, die Herstellungskosten besonders niedrig zu halten, die Dichteinrichtung als einstückiger Bestandteil einer betreffenden Endkappe des Filterelementes ausgebildet, d.h. aus dem gleichen Werkstoff hergestellt wie die Endkappe. Diese Bauweise verbilligt und vereinfacht die Herstellung insofern, als auf die konventionellen separaten Dichteinrichtungen, die sich zwischen Filterelement und einem Gehäuseabschlussteil erstrecken, verzichtet werden kann. Auch gestalten sich Montagevorgänge einfach, weil kein Augenmerk auf die Handhabung separater Dichteinrichtungen gelegt werden muss. Andererseits ergeben sich Einschränkungen hinsichtlich der Güte der gebildeten Abdichtung, weil Kunststoffwerkstoffe, die für die Herstellung der Endkappen geeignet und üblich sind, nicht sämtliche als geeignete Dichtungsmaterialien anzusehen sind. Dadurch ergeben sich Einschränkungen bei der Materialauswahl bei der Herstellung der Endkappen. Hinzu kommt, dass bei einstückig an der Endkappe angeformter Dichteinrichtung eine enge Tolerierung bei der Herstellung der Endkappen erforderlich ist, um eine sichere Abdichtung zu gewährleisten.

Die DE 20 2006 011 990 U1 beschreibt eine Filtervorrichtung mit einem topfartigen Filtergehäuse, mit einem in diesem aufnehmbaren Filterelement mit mindestens einer Endkappe und einer zum lösbaren Festlegen des Filterelementes entlang seiner Längsachse dienenden Halteeinrichtung, die an der Innenseite des Filtergehäuses und am Filterelement ausgebildete, miteinander zusammenwirkende Verschraubungselemente aufweist, und mit einer Dichteinrichtung, die zwischen dem Filterelement und einem das Filtergehäuse endseitig begrenzenden Gehäuseabschlussteil die Abdichtung bildet, wobei das Gehäuseabschlussteil eine Elementaufnahme mit einem zur Längsachse konzentrischen, innere Verschraubungselemente aufweisenden Fluiddurchgang bildet, in den ein Anschlussstutzen der Endkappe mit äußeren Verschraubungselementen einschraubbar ist, wobei die Dichteinrichtung ein Dichtelement in Form eines als O-Ring ausgebildeten Dichtrings aufweist, das mit der Endkappe zu einem zusammenhängenden Bauteil vereinigt und in einem Sitz aufgenommen ist, der am Übergang zwischen Endkappe und dem benachbarten Anfang der Gewindegänge der am Anschlussstutzen befindlichen Verschraubungselemente ausgebildet ist, wobei das Gehäuseabschlussteil als Bodenteil des Filtergehäuses die Elementaufnahme für die dem Gehäuseboden zugeordnete Endkappe des Filterelementes bildet, wobei der Fluiddurchgang des Bodenteils durch einen ins Innere des Gehäuses vorstehenden Ringrand begrenzt ist.

Weitere Filtervorrichtungen gehen aus der DE 25 06 359 A1, der DE 88 04 930 U1 und der FR 2 380 058 A1 hervor.

Ausgehend vom Stand der Technik stellt sich die Erfindung die Aufgabe, unter Beibehaltung der Vorteile, nämlich der einfachen Montagehandhabung und niedriger Herstellungskosten, eine Filtervorrichtung zur Verfügung zu stellen, die sich durch eine besonders sichere Abdichtung zwischen Filterelement und Filtergehäuse auszeichnet.

Diese Aufgabe löst eine Filtervorrichtung mit den Merkmalen des Patentanspruches 1 in seiner Gesamtheit.

Gemäß dem kennzeichnenden Teil des Patentanspruches 1 besteht eine wesentliche Besonderheit der Erfindung darin, dass der Ringrand eine Anlagefläche für die durch die Haltekraft der Verschraubungselemente anliegende Endkappe bildet, dass der Fluiddurchgang des Bodenteils an dem an den Ringrand angrenzenden Endabschnitt eine den Innendurchmesser zum Ringrand hin vergrößernde Schrägfläche besitzt, die eine Dichtfläche für die Zusammenwirkung mit dem am Anschlussstutzen der Endkappe festgelegten Dichtelement bildet, und dass der Dichtring am Anschlussstutzen in dem Sitz zwischen der ebenen, in einer Radialebene verlaufenden unteren Endfläche der Endkappe und dem ersten Gewindegang der Verschraubungselemente des Anschlussstutzens gehalten ist.

Dadurch ergibt sich beim Festdrehen der Verschraubung eine definierte, das Dichtelement verpressende Dichtkraft, die durch die formschlüssige Anlage der Endkappe am Ringrand des Fluiddurchganges begrenzt ist. Durch den Ringrand ist eine besonders sichere Abdichtung gewährleistet, da das Dichtelement in Zusammenwirkung mit der schrägen Dichtfläche durch die Haltekraft der Verschraubungselemente sowohl axial als auch radial verpresst wird.

Es ist ferner vorgesehen, dass das Gehäuseabschlussteil, an dem die Abdichtung gegenüber dem Filterelement auszubilden ist, als Elementaufnahme des Filterelementes mit einem zu dessen Längsachse konzentrischen, mit inneren Verschraubungselementen versehenen Fluiddurchgang ausgebildet ist, wobei in den Fluiddurchgang des Gehäuseabschlussteils ein Anschlussstutzen der Endkappe mit äußeren Verschraubungselementen einschraubbar ist, und wobei die Dichteinrichtung ein Dichtelement aufweist, das mit an der Endkappe in einem Sitz derart aufgenommen ist, dass es mit der Endkappe zu einem zusammenhängenden Bauteil vereinigt ist. Dabei ist die Anordnung so getroffen, dass sich der Sitz des Dichtelementes am Übergang zwischen Endkappe und dem benachbarten Anfang der Gewindegänge der am Anschlussstutzen der Endkappe befindlichen Verschraubungselemente befindet.

Bei dieser Positionierung des Dichtelementes führt das Festdrehen der Verschraubung, d.h. das Einschrauben des Anschlussstutzens der Endkappe in den Fluiddurchgang des Gehäuseabschlussteiles, zu einem Kraftschluss zwischen Endkappe, daran anliegendem Dichtelement und dem betreffenden Ende des Fluiddurchganges im Gehäuseabschlussteil, so dass die Haltekraft der Verschraubungselemente gleichzeitig die am Dichtelement wirksame Dichtkraft erzeugt. Dadurch, dass das Dichtelement mit der Endkappe ein zusammenhängendes Bauteil bildet, gestaltet sich gleichzeitig der Montagevorgang einfach und sicher. Zugleich sind keinerlei Beschränkungen hinsichtlich der Werkstoffauswahl gegeben, weil die Endkappe aus geeigneten Kunststoffen pressgeformt werden kann, ungeachtet dessen, ob ein betreffender Werkstoff als Dichtmaterial geeignet ist oder nicht. Hinsichtlich der Wahl des Werkstoffes des Dichtelementes bestehen ebenfalls keinerlei Einschränkungen. Vielmehr kann ein geeigneter Werkstoff, beispielsweise ein Elastomer, insbesondere Kautschukmaterial, im Hinblick auf die jeweiligen Anforderungen beliebig gewählt werden, etwa in Gestalt eines O-Ringes.

In vorteilhafter Weise kann die Anordnung so getroffen sein, dass das Gehäuseabschlussteil als Bodenteil des Filtergehäuses die Elementaufnahme für die dem Gehäuseboden zugeordnete Endkappe des Filterelementes bildet. Bei einem in üblicher Weise von seiner Außenseite her zu einem inneren Filterhohlraum durchströmten Filterelement kann über den Anschlussstutzen der Endkappe das abgereinigte Fluid unmittelbar über den Fluiddurchgang des Gehäusebodens nach unten hin mit entlang der Längsachse verlaufender Strömungsrichtung mit geringem Strömungswiderstand abströmen.

Die Gewindegänge am Anschlussstutzen der Endkappe können als Rundgewinde ausgebildet sein, was eine rationelle Herstellung der Endkappe durch Pressformen begünstigt.

Bei besonders vorteilhaften Ausführungsbeispielen kann die Anordnung so getroffen sein, dass das Bodenteil an die ebene Anlagefläche am Ringrand angrenzende, radiale Rippen aufweist, deren axiale Höhe zum Umfangsbereich des Bodenteiles hin abnimmt. Dadurch ergibt sich eine hohe Strukturfestigkeit des Bodenteiles bei geringem Werkstoffaufwand. Gleichzeitig ist keine enge Tolerierung der Abmessung der Rippen erforderlich, weil durch deren geneigten Verlauf lediglich die Anlageflächen am Ringrand mit der Endkappe zusammenwirken.

Nachstehend ist die Erfindung anhand eines in der Zeichnung dargestellten Ausführungsbeispieles im Einzelnen erläutert. Es zeigen:
- Fig. 1: eine perspektivische, abgebrochen, aufgeschnitten und stark schematisch vereinfacht gezeichnete Darstellung lediglich des unteren, bodenseitigen Endabschnittes einer Filtervorrichtung gemäß einem Ausführungsbeispiel der Erfindung;

- Fig. 2: einen Längsschnitt des in Fig. 1 gezeigten unteren Abschnittes des Ausführungsbeispieles;
- Fig. 3: einen gegenüber Fig. 2 vergrößert gezeichneten Teilausschnitt des in Fig. 2 mit III bezeichneten Bezirks; und
- Fig. 4 und 5: einen Längsschnitt bzw. eine Seitenansicht lediglich der Filter-element-Endkappe des Ausführungsbeispieles.

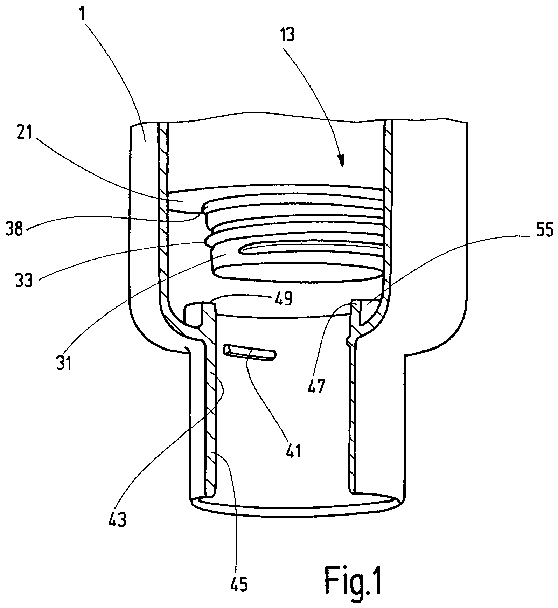

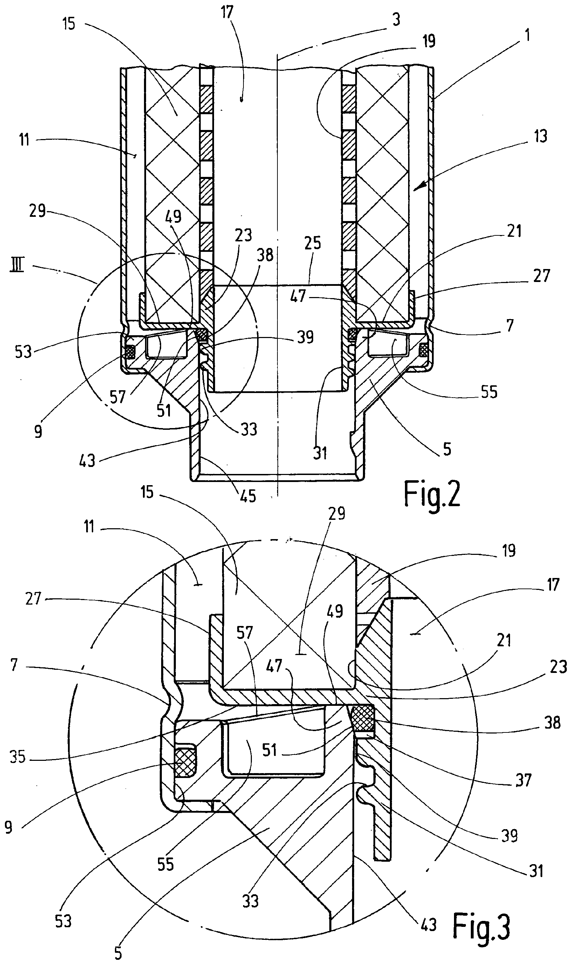

Die Fig. 1 und 2 zeigen von einem Filtergehäuse 1 in Form eines in seinem Umriß zur Längsachse 3 rotationssymmetrischen Topfes lediglich den unteren, bodenseitigen Endabschnitt, an dem das Gehäuse 1 durch ein Bodenteil 5 abgeschlossen ist. Das Bodenteil 5 kann durch ein metallisches Spritzgussteil oder ein aus Kunststoff pressgeformtes Bauteil gebildet sein. An seinem Außenumfang ist das Bodenteil 5 an einem Bördelungsbereich 7 mit der sich nach oben erstreckenden Gehäusewand verbunden, wobei am Bördelungsbereich 7 eine Dichtungsanordnung 9 in einer umfänglichen Ringnut des Bodenteiles 5 eingesetzt ist. Das Filtergehäuse 1 ist an dem in der Zeichnung nicht dargestellten oberen Teil durch einen Gehäusedeckel abgeschlossen, der in üblicher Bauweise gestaltet sein kann und eine (nicht gezeigte) Fluidzuführung aufweist, über die abzureinigendes Fluid zu einem äußeren Fluidraum 11 zuführbar ist, der sich an der Außenseite eines Filterelementes 13 in Form einer Filterpatrone befindet. Im Betrieb strömt das abzureinigende Fluid vom äußeren Raum 11 durch das Filtermaterial 15 des Filterelementes 13 hindurch in einen inneren Filterhohlraum 17, der die Reinseite beim Filtrationsvorgang bildet und sich im Inneren eines fluiddurchlässigen Stützrohres 19 befindet, das vom Filtermaterial 15 umgeben ist. An dem dem Bodenteil 5 zugewandten unteren Ende ist das Stützrohr 19 mit einer Endkappe 21 des Filterelementes 13 verbunden, die auch eine Einfassung für den zugewandten Endrand des Filtermaterials 15 bildet. Die Endkappe 21 kann mit dem Stützrohr 19 einstückig aus Kunststoff pressgeformt sein oder, wie in Fig. 2 und 3 gezeigt, ein separates, an die Endkappe 21 angefügtes Bauteil bilden.

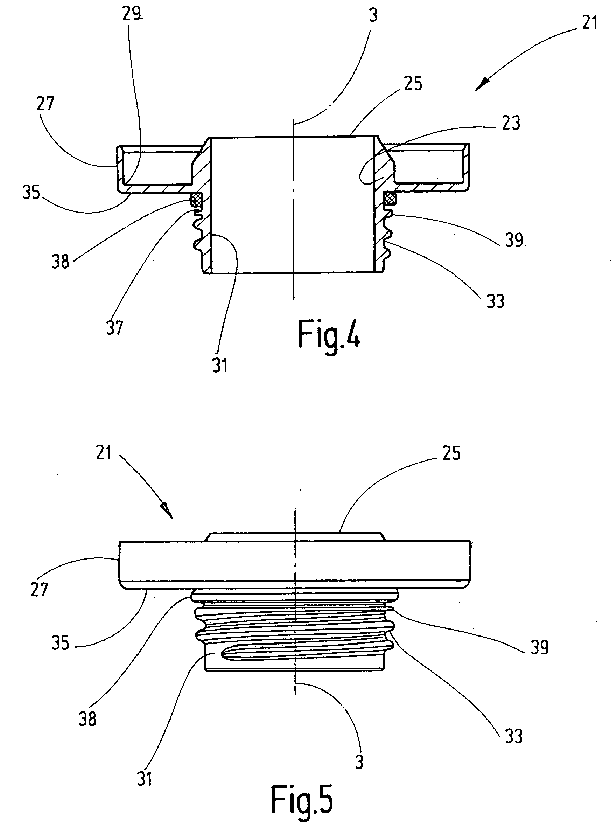

Wie aus Fig. 2 und 3 zu ersehen ist, bildet das Bodenteil 5 dasjenige Gehäuseabschlußteil, das für das Festlegen des Filterelementes 13 innerhalb des Filtergehäuses 1 eine mit der betreffenden Endkappe 21 zusammenwirkende Elementaufnahme bildet, an der gleichzeitig die Abdichtung zwischen Filterelement 13 und Filtergehäuse 1 erfolgt. Die Gestaltung der Endkappe 21 des Filterelementes 13 ist am Besten aus Fig. 3 bis 5 ersichtlich, von denen die Fig. 4 und 5 die Endkappe 21 in Einzeldarstellung zeigen. Diese ist ein Rotationskörper mit einem zentralen, zur Achse 3 konzentrischen Hohlkörper 23. Im Bereich von dessen einem Ende 25 ist der Körper 23 von einem sich radial erstreckenden Ringkörper 27 umgeben, der einen zur Seite des Endes 25 hin offenen Ringraum 29 begrenzt, der die Einfassung für das in ihm aufgenommene Ende des Filtermaterials 15 des Filterelementes 13 bildet. Vom Ringkörper 27 ausgehend bildet der Körper 23 einen sich in Axialrichtung erstreckenden Anschlußstutzen 31, an dessen Außenseite sich Verschraubungselemente 33 in Form eines als Rundgewinde gestalteten Außengewindes befinden. Anschließend an die vom Ende 25 abgewandte, ebene untere Endfläche 35 des Ringkörpers 27 befindet sich am Außenumfang des Anschlußstutzens 31 ein ringnutartiger Sitz 37, in dem ein Dichtelement in Form eines Dichtringes 38 zwischen der Endfläche 35 und dem ersten Gewindegang 39 derart aufgenommen und lagegesichert ist, dass der Dichtring 38 mit der Endkappe 21 ein zusammenhängendes Bauteil bildet. Anders ausgedrückt, kann die Endkappe 21, und damit das ihr zugehörige Filterelement 13, das für die Abdichtung erforderlich Dichtelement als vormontiertes Bauteil vor der Inbetriebnahme des betreffenden Filterelementes enthalten.

Wie am deutlichsten aus Fig. 4 und 5 zu ersehen ist, bildet der Dichtring 38 in unbelastetem Zustand einen radialen Überstand über die Verschraubungselemente 33. Aufgrund dieser Konfiguration kommt es zu dem in Fig. 2 und 3, insbesondere in Fig. 3, gezeigten Dichtungseingriff mit einer zugeordneten Dichtfläche am Bodenteil 5, wenn eine das Filterelement 13 in der durch das Bodenteil 5 gebildeten Elementaufnahme sichernde Haltekraft wirksam wird, die durch das Verschrauben der Verschraubungselemente 33 am Anschlußstutzen 31 mit zugeordneten Verschraubungselementen 41 am Bodenteil 5 wirksam wird. Diese Verschraubungselemente 41 am Bodenteil 5 sind in einem inneren, konzentrischen Fluiddurchgang 43 des Bodenteiles 5 durch radial nach innen vorstehende Schrägrippen, von denen lediglich in Fig. 1 eine dargestellt ist und die als Teile einzelner Abschnitte von Gewindegängen fungieren, gebildet, nämlich als Teile einer Rundgewindeverschraubung in Zusammenwirkung mit den als Rundgewinde gestalteten Gewindegängen 39 am Anschlußstutzen 31 der Endkappe 21. Wie Fig. 2 und 3 zeigen, ist der Fluiddurchgang 43 des Bodenteiles 5 am äußeren, unteren Ende durch einen Rohrstutzen 45 verlängert, an dem die (nicht gezeigte) Anschlußverbindung für die Abfuhr des abgereinigten Fluides gebildet ist. An dem dem unteren Rohrstutzen 45 abgekehrten inneren Ende bildet der Fluiddurchgang 43 einen axial vorstehenden Ringrand 47, dessen Ende eine ebene, in einer Radialebene verlaufende Ringfläche bildet, die als Anlagefläche 49 für die ebene untere Endfläche 35 eines in der gebildeten Elementaufnahme aufgenommenen Filterelementes 13 dient. In dem zur Anlagefläche 49 hin verlaufenden Endabschnitt des Öffnungsrandes des Fluiddurchganges 43 bildet dieser eine den Durchmesser des Fluiddurchganges 43 zur Anlagefläche 49 vergrößernde Schrägfläche 51. Diese bildet in Zusammenwirkung mit dem Dichtring 38 die bodenseitige Dichtfläche der Abdichtung zwischen Endkappe 21 und Bodenteil 5.

Wie am besten aus Fig. 3 zu ersehen ist, ist der Dichtring 38 bei festgedrehter Verschraubung, bei der die Endfläche 35 der Endkappe 21 an der Anlagefläche 49 anliegt, zwischen dem Sitz 37 und der Schrägfläche 51 durch die Haltekraft der Verschraubung sowohl in Radialrichtung als auch in Axialrichtung verpresst. Beim Instellungbringen des Filterelementes 13 und der Lagefixierung an der durch das Bodenteil 5 gebildeten Elementaufnahme erfolgt somit die Abdichtung zwischen den Räumen 11 (Schmutzseite beim Filtrationsvorgang) und 17 (Reinseite), wobei die formschlüssige Anlage der Endfläche 35 des Filterelementes 13 an der Anlagefläche 49 des Ringrandes 47 des Bodenteiles 5 eine Anschlageinrichtung bildet, die die Haltekraft beim Festdrehen der Verschraubung, unabhängig vom Anzugsmoment der Verschraubung, auf einen Wert begrenzt, bei dem der Dichtring 38 an der Schrägfläche 51 und im Sitz 37 derart verpresst ist, dass die Dichtkraft die für den Werkstoff des Dichtringes 38 optimalen Stärke besitzt.

Das Bodenteil 5 bildet in dem oberen oder inneren Längenabschnitt zwischen dem Ringrand 47 und dem Umfangsbereich 53 keinen Vollkörper, sondern weist eine Folge sternförmig angeordneter, sich radial erstreckender Rippen 55 auf. Mit geringem Werkstoffaufwand wird dadurch eine hohe Strukturfestigkeit des Bodenteiles 5, insbesondere eine gute Druckfestigkeit, erreicht. Die Oberseite 57 der Rippen 55 weist einen vom Ringrand 47 zum Umfangsbereich 53 hin abfallenden Verlauf auf, der radial nach außen den Abstand zur Endfläche 35 der anliegenden Endkappe 21 vergrößert. Dadurch ist, ohne dass beim Pressformen des Bodenteiles 5 hinsichtlich der Rippen 55 enge Toleranzen eingehalten werden müssen, gewährleistet, dass die Lagefixierung der Endkappe 21 lediglich an der Anlagefläche 49 des Ringrandes 47 erfolgt.

Es versteht sich, dass anstelle der gezeigten Verschraubungselemente 33, 41, die ein Rundgewinde bilden, andere Verschraubungselemente vorgesehen sein könnten, beispielsweise ein übliches metrisches Gewinde. Anstelle des gezeigten Verbundes zwischen Bodenteil 5 und der sich nach oben erstreckenden Wand des Filtergehäuses 1 durch Ausbildung eines Bördelungsbereiches 7 könnte das Bodenteil 5 ein verschraubter Gehäusedeckel oder mit der anschließenden Gehäusewand einstückig ausgebildet sein.

## Patentansprüche

1. Filtervorrichtung mit einem topfartigen Filtergehäuse (1), mit einem in diesem aufnehmbaren Filterelement (13) mit mindestens einer Endkappe (21) und einer zum lösbaren Festlegen des Filterelementes (13) entlang seiner Längsachse (3) dienenden Halteeinrichtung, die an der Innenseite des Filtergehäuses (1) und am Filterelement (13) ausgebildete, miteinander zusammenwirkende Verschraubungselemente (33, 41) aufweist, und mit einer Dichteinrichtung (38), die zwischen dem Filterelement (13) und einem das Filtergehäuse (1) endseitig begrenzenden Gehäuseabschlussteil (5) die Abdichtung bildet, wobei das Gehäuseabschlussteil (5) eine Elementaufnahme mit einem zur Längsachse (3) konzentrischen, innere Verschraubungselemente (41) aufweisenden Fluiddurchgang (43) bildet, in den ein Anschlussstutzen (31) der Endkappe (21) mit äußeren Verschraubungselementen (33) einschraubbar ist, wobei die Dichteinrichtung ein Dichtelement (38) in Form eines als O-Ring ausgebildeten Dichtrings (38) aufweist, das mit der Endkappe (21) zu einem zusammenhängenden Bauteil vereinigt und in einem Sitz (37) aufgenommen ist, der am Übergang zwischen Endkappe (21) und dem benachbarten Anfang der Gewindegänge (39) der am Anschlussstutzen (31) befindlichen Verschraubungselemente (33) ausgebildet ist, wobei das Gehäuseabschlussteil als Bodenteil (5) des Filtergehäuses (1) die Elementaufnahme für die dem Gehäuseboden zugeordnete Endkappe (21) des Filterelementes (13) bildet, wobei der Fluiddurchgang (43) des Bodenteils (5) durch einen ins Innere des Gehäuses (1) vorstehenden Ringrand (47) begrenzt ist, **dadurch gekennzeichnet, dass** der Ringrand (47) eine Anlagefläche (49) für die durch die Haltekraft der Verschraubungselemente (33, 41) anliegende Endkappe (21) bildet, dass der Fluiddurchgang (43) des Bodenteils (5) an dem an den Ringrand (47) angrenzenden Endabschnitt eine den Innendurchmesser zum Ringrand (47) hin vergrößernde Schrägfläche (51) besitzt, die eine Dichtfläche für die Zusammenwirkung mit dem am Anschlussstutzen (31) der Endkappe (21) festgelegten Dichtelement (38) bildet, und dass der Dichtring (38) am Anschlussstutzen (31) in dem Sitz (37) zwischen der ebenen, in einer Radialebene verlaufenden unteren Endfläche (35) der Endkappe (21) und dem ersten Gewindegang (39) der Verschraubungselemente (33) des Anschlussstutzens (31) gehalten ist.

2. Filtervorrichtung nach Anspruch 1, **dadurch gekennzeichnet, dass** die Gewindegänge (39) am Anschlussstutzen (31) als Rundgewinde ausgebildet sind.

3. Filtervorrichtung nach Anspruch 1 oder 2, **dadurch gekennzeichnet, dass** das Bodenteil (5) an die ebene Anlagefläche (49) am Ringrand (47) angrenzende, radiale Rippen (55) aufweist, deren axiale Höhe zum Umfangsbereich (53) des Bodenteiles (5) hin abnimmt.

## Claims

1. A filter device comprising a cup-shaped filter housing (1), with a filter element (13) which can be accommodated in the latter, with at least one end cap (21), and a retaining device which is used for the detachable fixing of the filter element (13) along its longitudinal axis (3) and which has screwing elements (33, 41) which interact with one another and which are configured on the inside of the filter housing (1) and on the filter element (13), and with a sealing device (38) which forms the seal between the filter element (13) and a housing terminating part (5) which borders the filter housing (1) on the end side, the housing terminating part (5) forming an element receiving device with a fluid passage (43) that has inner screwing elements (41) concentric to the longitudinal axis (3), into which fluid passage a connecting piece (31) of the end cap (21) can be screwed with external screwing elements (33), the sealing device having a sealing element (38) in the form of a gasket (38) designed as an O ring which is combined with the end cap (21) to form a cohesive component and is accommodated in a seat (37) which is formed on the transition between the end cap (21) and the adjacent start of the thread turns (39) of the screwing elements (33) located on the connecting piece (31), the housing terminating part, as the bottom part (5) of the filter housing (1), forming the element receiving device for the end cap (21) of the filter element (13) assigned to the bottom of the housing, the fluid passage (43) of the bottom part (5) being limited by an annular edge (47) projecting into the interior of the housing (1), **characterised in that** that the annular edge (47) forms a contact surface (49) for the end cap (21) which adjoins due to the retaining force of the screwing elements (33, 41), that the fluid passage (43) of the bottom part (5) on the end section bordering the annular edge (47) has an oblique surface (51) which increases the inside diameter toward the annular edge (47) and which forms a sealing surface for the interaction with the sealing element (38) which is fixed on the connecting piece (31) of the end cap (21), and that the gasket (38) is held on the connecting piece (31) in the seat (37) between the flat lower end surface (35) of the end cap (21) which runs in a radial plane and the first thread turn (39) of the screwing elements (33) of the connecting piece (31).

2. The filter device according to Claim 1, **characterised in that** the thread turns (39) on the connecting piece (31) are formed as a round thread.

3. The filter device according to Claim 1 or 2, **characterised in that** the bottom part (5) has radial ribs (55) which border the flat contact surface (49) at the annular edge (47), the axial height of which decreases toward the peripheral area (53) of the bottom part (5).

## Revendications

1. Dispositif de filtration comprenant une enveloppe (1) de filtre de type en pot, comprenant un élément (13) filtrant pouvant y être reçu et ayant au moins une coiffe (21) d'extrémité et un dispositif de maintien servant à fixer de manière amovible l'élément (13) filtrant le long de son axe (3) longitudinal, dispositif qui a des éléments (33, 41) de vissage constitués sur la face intérieure de l'enveloppe (1) du filtre et sur l'élément (13) filtrant et coopérant entre eux, et comprenant un dispositif (38) d'étanchéité qui forme l'étanchéité entre l'élément (13) filtrant et une partie (5) de fermeture de l'enveloppe délimitant l'enveloppe (1) du filtre du côté de l'extrémité, la partie (5) de fermeture de l'enveloppe formant un logement d'élément ayant un passage (43) pour du fluide concentrique à l'axe (3) longitudinal et ayant des éléments (41) intérieurs de vissage, dans lequel une tubulure (31) de raccordement de la coiffe (21) d'extrémité peut être vissée par des éléments (33) extérieurs de vissage, le dispositif d'étanchéité ayant un élément (38) d'étanchéité sous la forme d'un joint (38) constitué en joint torique, qui est réuni avec la coiffe (21) d'extrémité en une pièce d'un seul tenant et qui est reçu dans un siège (37), qui est constitué à la transition entre la coiffe (21) d'extrémité et le début des filetages (39) des éléments (33) de vissage se trouvant sur la tubulure (31) de raccordement, la partie de fermeture de l'enveloppe formant, sous la forme d'une partie (5) de fond de l'enveloppe (1) du filtre, le logement d'élément pour la coiffe (21) d'extrémité, associée au fond de l'enveloppe, de l'élément (13) filtrant, le passage (43) pour du fluide de la partie (5) de fond étant délimité par un bord (47) annulaire en saillie à l'intérieur de l'enveloppe (1), **caractérisé en ce que** le bord (47) annulaire forme une surface (49) d'application de la coiffe (21) d'extrémité appliquée par la force de maintien des éléments (33, 41) de vissage), **en ce que** le passage (43) pour du fluide de la partie (5) de fond possède, au tronçon d'extrémité voisin du bord (47) annulaire, une surface (51) inclinée, qui agrandit le diamètre intérieur en direction du bord (47) annulaire et qui forme une surface d'étanchéité pour coopérer avec l'élément (38) d'étanchéité fixé à la tubulure (31) de raccordement de la coiffe (21) d'extrémité, et **en ce que** le joint (38) est maintenu sur la tubulure (31) de raccordement dans le siège (37) entre la surface (35) d'extrémité inférieure plane s'étendant dans un plan radial de la coiffe (21) d'extrémité et le premier filetage (39) des éléments (33) de vissage de la tubulure (31) de raccordement.

2. Dispositif de filtration suivant la revendication 1, **caractérisé en ce que** les filetages (39), sur la tubulure (31) de raccordement, sont constitués sous la forme de filets ronds.

3. Dispositif de filtration suivant la revendication 1 ou 2, **caractérisé en ce que** la partie (5) de fond a, sur la surface (49) d'application plane, des nervures (55) radiales, qui sont voisines du bord (47) annulaire et dont la hauteur axiale diminue vers la zone (53) périphérique de la partie (5) de fond.
